# EUROPÄISCHE PATENTSCHRIFT

(11) **EP 3 971 021 B1**
(45) Veröffentlichungstag und Bekanntmachung des Hinweises auf die Patenterteilung: **09.10.2024**
(21) Anmeldenummer: 21185378.3
(22) Anmeldetag: 13.07.2021
(51) Int. Cl.: B60L 53/30, B60L 53/66, G07F 15/00, G06Q 20/14

(54) **LADESTATION FÜR ELEKTROFAHRZEUGE MIT EINER MANIPULATIONSGESCHÜTZTEN BEZAHLVORRICHTUNG**
CHARGING STATION FOR ELECTRIC VEHICLES WITH A TAMPER-PROOF PAYMENT DEVICE
STATION DE RECHARGE POUR VÉHICULES ÉLECTRIQUES DOTÉE D'UN DISPOSITIF DE PAIEMENT PROTÉGÉ CONTRE LES MANIPULATIONS

(30) Priorität: 16.09.2020 DE 102020124154
(43) Veröffentlichungstag der Anmeldung: 23.03.2022
(73) Patentinhaber: E.ON Solutions GmbH, 45131 Essen (DE); Charge-ON GmbH, 45131 Essen (DE); Westenergie AG, 45128 Essen (DE)
(72) Erfinder: Gaul, Armin, 59379 Selm (DE); Gläsel, Lukas, 45130 Essen (DE); Lehmann, Eckhard, 46446 Emmerich am Rhein (DE); Radnoti, Benjamin, 85354 Freising (DE)
(74) Vertreter: Gunzelmann, Rainer

(56) Entgegenhaltungen:
- EP-A1- 3 093 184
- DE-A1- 102015 113 799
- DE-U1- 202017 101 677

## Beschreibung

### TECHNISCHES GEBIET

Die vorliegende Offenbarung betrifft das technische Gebiet des Schutzes von Ladestationen für Elektrofahrzeuge vor Angriffen und Manipulationsversuchen durch Dritte. Insbesondere betrifft die vorliegende Offenbarung eine Ladestation für Elektrofahrzeuge mit einer manipulationsgeschützten Bezahlvorrichtung.

### HINTERGRUND

Öffentlich aufgestellte Ladestationen für Elektrofahrzeuge ermöglichen Haltern von Elektrofahrzeugen ihre Elektrofahrzeuge mit elektrische Energie zu laden. Die Bezahlung des Ladevorgangs kann dabei über eine in der Ladestation verbaute Bezahlvorrichtung, beispielsweise mit Hilfe einer Kreditkarte, einer EC-Karte oder drahtlos über eine auf einem Mobiltelefon hinterlegte Kredit-oder EC-Karte, erfolgen.

Die Bezahlung und Abrechnung des Ladevorgangs muss in Deutschland eirechtskonform erfolgen. Dies umfasst insbesondere, dass die von dem Elektrofahrzeug bezogene Energiemenge durch einen geeichten Stromzähler in der Ladestation ermittelt wird und die mit der Bezahlung bzw. Abrechnung des Ladevorgangs zusammenhängende Aktionen mit dem Eichrecht in Einklang stehen. Insbesondere muss nach Abschluss eines Ladevorgangs dem Kunden die Möglichkeit gegeben werden, zu prüfen, ob er die Energiemenge erhalten hat, welche ihm in Rechnung gestellt wird. Bedingt durch den Aufbau üblicher Ladestationen hat der Kunde in der Regel jedoch keine unmittelbare Möglichkeit, dies nach dem Ladevorgang an der Ladestation zu prüfen. Aus diesem Grund müssen die Daten, welche der Kunde für seine Prüfung benötigt, manipulationssicher gespeichert und zur Bereitstellung für den Kunden vorgehalten werden.

Die EP2531368B1 und die EP2755846B1 offenbaren Verfahren und Vorrichtungen zur Zuordnung eines von einer Ladestation erfassten Messwertes zu einer Transaktion.

In diesen Druckschriften wird vorgeschlagen, eine Manipulationssicherheit der Ladestation dadurch zu erreichen, dass die in der Ladestation erzeugten Daten mit einer digitalen Signatur zu einem Datenpaket verknüpft und nur digital signierte Datenpakete an eine Abrechnungszentrale gesendet werden. In einer Ausführungsform wird eine Ladestation beschrieben, die einen Münzautomat zum Zahlen eines Ladevorgangs offenbart, der mit einer Zentralprozessoreinheit eines Messgeräts verbunden ist. Das Messgerät umfasst einen Stromzähler und eine Signaturvorrichtung. Wenn ein anonymer Nutzer die Ladestation zum Laden seines Elektrofahrzeugs nutzen möchte, so kann er am Münzautomaten einen Geldbetrag entsprechend der zu beziehenden Energie bezahlen. Die Ladestation erfasst den Geldbetrag und sendet eine Ladeanforderung zusammen mit der Information über den gezahlten Geldbetrag an die Abrechnungszentrale. Anschließend wird das Elektrofahrzeug mit elektrischer Energie geladen. In einer weiteren Ausführungsform wird eine Signatureinheit offenbart, die aus einem Datenpaket, welches eine Transaktionskennung und einen Messgeräteschlüssel umfasst, eine Signatur berechnet.

Die DE 10 2015 113799 A1 betrifft eine eine Ladestation für Elektrofahrzeuge mit einer Ladesteuerschaltung zur Steuerung eines Ladevorgangs eines Elektrofahrzeugs an der Ladestation.

Die DE 20 2017 101677 U1 betrifft eine Ladestation zum Bereitstellen elektrischer Energie für ein elektrisch betreibbares Fahrzeug.

### KURZER ABRISS

Der vorliegenden Offenbarung liegt die Aufgabe zugrunde, eine Ladestation für Elektrofahrzeuge bereitzustellen, bei der die Bezahlvorrichtung vor Angriffen und Manipulationsversuchen durch Dritte geschützt ist.

Im Rahmen der vorliegenden Erfindung wurde erkannt, dass ein nicht ausreichend geschützter Angriffspunkt für Manipulationsversuche die Bezahlvorrichtung sein kann, insbesondere, wenn von der Bezahlvorrichtung erfasste Daten bzw. in der Bezahlvorrichtung erzeugte Daten die Bezahlvorrichtung verlassen. Ist die Bezahlvorrichtung beispielsweise als Kreditkartenterminal ausgebildet, so liest das Kreditkartenterminal bei Bezahlvorgängen die Kreditkartendaten der Kreditkarten aus, so dass die Bezahlvorrichtung bzw. die Ausgabeschnittstelle der Bezahlvorrichtung für kriminelle Personen ein Angriffspunkt zum Abgreifen von Kreditkartendaten sein kann.

Zur Lösung dieses Problems wird eine Ladestation für Elektrofahrzeuge gemäß Anspruch 1 vorgeschlagen, die Folgendes umfasst: eine Steuervorrichtung, die dazu eingerichtet ist, einen Ladevorgang eines mit der Ladestation verbundenen Elektrofahrzeugs mit elektrischer Energie zu steuern, einen Stromzähler, der dazu eingerichtet ist, einen Zählwert betreffend eine während des Ladevorgangs von der Ladestation dem Elektrofahrzeug zugeführte Energiemenge zu bestimmen, eine Bezahlvorrichtung, die dazu eingerichtet ist, die von der Ladestation dem Elektrofahrzeug zugeführte Energiemenge zu bezahlen und eine Identifikationskennung auszugeben, eine Signaturvorrichtung, die dazu eingerichtet ist, die von der Bezahlvorrichtung ausgegebene Identifikationskennung zu empfangen und die Identifikationskennung und zusätzliche Informationselemente digital zu signieren, und eine Kommunikationsvorrichtung, die dazu eingerichtet ist, die digital signierte Identifikationskennung und die digital signierten zusätzlichen Informationselemente an eine Zentraleinheit zu senden, wobei die Identifikationskennung von der Ausgabe durch die Bezahlvorrichtung bis zum Empfang durch die Signaturvorrichtung vor einem unbefugten und/oder unbemerkten Zugriff durch Dritte (d.h., unbefugte Personen) geschützt ist.

Bei der Steuervorrichtung kann es sich um eine zentrale Recheneinheit bzw. eine Mikrosteuereinheit handeln, welche die Funktionen der Ladestation zum Laden des Elektrofahrzeugs steuert. Insbesondere kann die Steuervorrichtung eine Kommunikation mit einer Informationstechnologie-Infrastruktur bzw. einem Backend, eine Nutzerauthentifizierung und ein Freischalten eines Ladevorgangs steuern, eine Kommunikation mit einem mit der Ladestation elektrisch verbundenen Elektrofahrzeug ausführen (beispielsweise gemäß der Norm ISO 15118), ein Lastmanagement der Ladestation steuern und Nutzerfunktionen an einer an der Ladestation angebrachten Anzeigevorrichtung visualisieren.

Bei dem Stromzähler handelt es sich insbesondere um einen geeichten Stromzähler, der eichrechtskonform einen Zählwert bestimmt, welcher einer Energiemenge entspricht, die von der Ladestation dem Elektrofahrzeug zugeführt wird. Es kann sich dabei um ein intelligentes Messsystem (ein sogenanntes "Smart Meter") handeln, welches eine Energieabgabe in Kilowattstunden (kWh) misst. Dabei kann der Zählwert auf einer Differenzbildung zwischen zwei Zählerständen beruhen. In Deutschland unterliegen Ladestationen und darin verbaute Stromzähler der Eichpflicht (vgl. MessEG und MessEV). Am 1. April 2019 endete eine Übergangsfrist für die Verwendung nicht geeichter Stromzähler in Ladestationen. Der Stromzähler kann auch gemäß der aktuellen Measuring Instruments Directive (MID) des Europäischen Parlaments geeicht sein.

Bei der Bezahlvorrichtung kann es sich um ein Kartenterminal mit einem Kreditkartenlesegerät handeln, in welches ein Kunde seine EC-Karte bzw. Kreditkarte einführen oder an welches ein Kunde seine EC-Karte bzw. Kreditkarte halten kann, um die von der Ladestation bezogene Energiemenge gegenüber dem Betreiber der Ladestation mit Hilfe eines Abrechnungsdienstleisters abzurechnen. Es ist auch denkbar, dass über ein Mobilfunktelefon, in welchem eine Kredit-oder EC-Karte hinterlegt ist, ein drahtloser Bezahlvorgang (beispielsweise über Bluetooth oder Radio-Frequency Identification, RFID) an der Bezahlvorrichtung erfolgt. Ferner kann die Bezahlvorrichtung eine Bezahlung über Apple Pay und/oder Google Pay unterstützen. Zur eichrechtskonformen Abrechnung der Zahlung erzeugt die Bezahlvorrichtung eine Identifikationskennung, die der Zentraleinheit zugeführt wird. Beispielsweise kann es sich bei der Identifikationskennung um eine Kreditkartennummer, eine Girokontonummer und/oder Teile einer Kreditkartennummer oder einer Girokontonummer (beispielsweise die letzten vier Stellen einer Kreditkartennummer oder einer Girokontonummer) handeln. Die Bezahlvorrichtung erfasst diese Nummer von der Kredit-oder EC-Karte.

Zusätzliche Informationselemente werden von der Ladestation zur Zentraleinheit gesendet. Die zusätzlichen Informationselemente stehen in Bezug zur Ladestation. So können neben der Identifikationskennung, wie beispielsweise eine Kunden- oder Transaktions-Identifikationsnummer ("Wer"), eine Energiemenge bzw. ein Zählwert des Stromzählers ("Was"), Information zur Ladestation, wie beispielsweise eine eindeutige Geräteidentifikationskennung der Ladestation und/oder des Stromzählers ("Wo"), und/oder Zeitinformation über den Ladevorgang ("Wann") von der Ladestation zur Zentraleinheit gesendet werden.

Die Signaturvorrichtung ist dazu eingerichtet, die Identifikationskennung und die zusätzlichen Informationselemente digital zu signieren. Dazu kann die Signaturvorrichtung dazu eingerichtet sein, auf einen in der Ladestation gespeicherten privaten Schlüssel und einen in der Ladestation gespeicherten öffentlichen Schlüssel zuzugreifen. Beispielsweise kann es sich bei dem privaten Schlüssel und dem öffentlichen Schlüssel um in dem Stromzähler gespeicherte Messgeräteschlüssel handeln. Der öffentliche Schlüssel kann auch auf einem gesicherten, zentralen Server, beispielsweise einem Server einer Eichbehörde, gespeichert sein. Dabei kann die Identifikationskennung mit einem oder mehreren der vorstehend beschriebenen zusätzlichen Informationselemente zu einem Datenpaket zusammengefügt und das Datenpaket digital signiert werden. Bei den zusätzlichen Informationselementen kann es sich um weitere in der Ladestation erzeugte Daten, wie beispielsweise Daten betreffend eine Identifikation der Ladestation und/oder ein Datum bzw. Zeitangaben eines Ladevorgangs handeln. Das Datenpaket und die dazugehörige Signatur können an die Zentraleinheit gesendet werden. Durch die digitale Signatur kann sichergestellt werden, dass das Datenpaket nachträglich nicht mehr manipuliert werden kann.

Die digitale Signierung kann insbesondere mithilfe zweier elektronischer Schlüssel, d.h. einem öffentlichen Schlüssel und einem privaten Schlüssel über ein asymmetrisches Verfahren erfolgen. Dabei können Daten, die mit dem privaten Schlüssel verschlüsselt wurden, nur mit dem öffentlichen Schlüssel entschlüsselt werden. Der private Schlüssel bleibt immer geheim, wohingegen der öffentliche Schlüssel jedermann zugänglich ist. Insbesondere kann der private Schlüssel nicht durch den öffentlichen Schlüssel errechnet werden. So wird von den digital zu signierenden Daten zunächst basierend auf einem mathematischen Verfahren die Quersumme gebildet, wodurch man den sogenannten "Hash-Wert" erhält. Dieser "Hash-Wert" wird dann mit Hilfe des privaten Schlüssels verschlüsselt. Mit dem öffentlichen Schlüssel kann die Signatur überprüft werden, in dem mit diesem die ursprüngliche Quersumme wiederhergestellt wird. Parallel wird von den signierten Daten erneut eine Quersumme gebildet und diese dann mit der vorliegenden entschlüsselten Quersumme verglichen. Eine Übereinstimmung ist der Beweis, dass eine Authentizität der Daten gegeben ist. Die Authentizitätsprüfung kann bei Datenpaketempfänger, d.h. in der Zentraleinheit erfolgen.

Bei der Kommunikationsvorrichtung kann es sich um jede Art von Kommunikationsmittel handeln, welches dazu eingerichtet ist, Daten von der Ladestation an die Zentraleinheit zu senden. Insbesondere sendet die Kommunikationsvorrichtung das Datenpaket mit den verknüpften Daten und einer Signatur an die Zentraleinheit. So kann es sich bei der Kommunikationsvorrichtung um eine drahtlose oder eine drahtgebundene Kommunikationsvorrichtung handeln, wie beispielsweise eine Mobilfunkvorrichtung oder ein Ethernet-Modul, die über eine Luftschnittstelle oder über das Internet eine Kommunikationsverbindung zu einer Zentraleinheit herstellt.

Bei der Zentraleinheit handelt es sich um einen Zentralrechner, vorzugsweise einen Zentralrechner eines Betreibers der Ladestation (d.h. ein sogenanntes "Backend"), der Abrechnungsfunktionen des Ladevorgangs ausführt. Die Abrechnungsfunktionen umfassen insbesondere eine Bereitstellung einer eichrechtskonformen Abrechnung des Ladevorgangs gegenüber dem Kunden. So können die folgenden Daten dem Kunden bereitgestellt und entsprechend in der Zentraleinheit gespeichert werden: Information betreffend eine von der Ladestation dem Elektrofahrzeug zugeführten Energiemenge ("Was"), eine Identifikationskennung ("Wer"), Information zur Ladestation ("Wo") und/oder Zeitinformation ("Wann").

Um die Ladestation bzw. die Bezahlvorrichtung vor einem Angriff bzw. einem Manipulationsversuch durch Dritte zu schützen, wird die Identifikationskennung von der Ausgabe durch die Bezahlvorrichtung (d.h. vom Zeitpunkt der Ausgabe durch die Bezahlvorrichtung) bis zum Empfang durch die Signaturvorrichtung (d.h. bis zum Zeitpunkt des Empfangs durch die Signaturvorrichtung) vor einem unbefugten und/oder unbemerkten Zugriff durch Dritte geschützt. Dadurch kann sichergestellt werden, dass die Identifikationskennung die Bezahlvorrichtung bzw. die Ladestation eichrechtskonform verlässt und eichrechtskonform zur späteren Nachprüfung durch den Kunden (beispielsweise auf einem digitalen Kundenbeleg) gespeichert wird.

Wenn die Bezahlvorrichtung und die Signaturvorrichtung über eine Datenleitung miteinander verbunden sind, kann die Verbindungen der beiden Enden der Datenleitung mit der Bezahlvorrichtung bzw. der Signaturvorrichtung mit Plomben und/oder Signallack versehen sein. Dadurch kann sichergestellt werden, dass jegliche Manipulation an der Datenleitung bzw. den Verbindungen erkannt wird. Es ist auch denkbar, dass die komplette Datenleitung mit Signallack versehen ist, sodass jegliche Betätigungen an der Datenleitung erkannt werden können. Diese Schutzvorkehrungen liefern auch den Vorteil einer relativ einfachen Implementierung.

Wenn in der vorliegenden Offenbarung von einer Datenleitung gesprochen werden, so kann es sich dabei immer auch um eine Vielzahl von Datenleitungen handeln, wie beispielsweise ein Netzwerkkabel mit einer Vielzahl von Adern und PINs.

Bei dem Signallack kann es sich insbesondere um einen Siegellack oder einen Packlack handeln, d.h., eine Masse (beispielsweise ein Harz), die fest auf einem Untergrund haftet und zum Zugriff auf den Untergrund zerstört werden muss.

Bei der Plombe kann es sich um eine kleine Scheibe (6-10 mm Durchmesser) mit einer oder zwei Bohrungen handeln, durch die ein Plombierdraht geführt wird. Anschließend wird die Plombe mit einer Plombierzange zusammengedrückt. Dabei wird der Plombierdraht unverschiebbar eingeklemmt. Gleichzeitig prägt die Plombierzange auf beiden Seiten der Plombe einen Stempel ein. Die Scheibe kann beispielsweise aus Kunststoff (Polycarbonat) oder aus Weichaluminium bestehen.

Insbesondere kann die Datenleitung an den beiden Enden Stecker umfassen, die in jeweilige Kupplungen in der Bezahlvorrichtung bzw. der Signaturvorrichtung gesteckt sind, wobei die Stecker und Kupplungen mit den Plomben und/oder dem Signallack versehen sind. Dabei können die Plomben als Plombierschellen ausgebildet sein, welche einen Stecker und eine Kupplung umgeben, wobei die Plombierschellen zerstört werden müssen, um auf den Stecker bzw. die Kupplung zugreifen zu können. Es kann auch eine Steckerplombe verwendet werden, die mit einem fortlaufend nummerierten Drahtseil gesichert ist.

Ferner kann die Datenleitung vollständig mit Signallack bedeckt sein, so dass die Datenleitung über die gesamte Länge geschützt ist.

Die Bezahlvorrichtung und die Signaturvorrichtung sind über eine Datenleitung miteinander verbunden sund die Datenleitung ist mechanisch vor einem Zugriff von außen abgeschirmt, um einen mechanischen Zugriff auf die Datenleitung zu verhindern.

Die mechanische Abschirmung umfasst ein Rohr und/oder einen Schlauch umfassen, welche(s/r) sich von der Bezahlvorrichtung bis zur Signaturvorrichtung erstreckt. Insbesondere kann das Rohr und/oder der Schlauch aus einem Material bestehen (beispielsweise Metall oder einem harten Kunststoff), welches nur mit einem hohen mechanischen Aufwand einen Zugriff auf die Datenleitung erlaubt. Es ist auch denkbar, dass das Rohr und/oder der Schlauch aus einem Material besteht (beispielsweise einem Kunststoff), dass zwar einfach zu zerstören ist, aber zerstört werden muss, um einen Zugriff auf die Datenleitung zu ermöglichen, sodass ein Zugriff auf die Datenleitung erkannt werden kann. Insbesondere kann es sich bei dem Rohr um ein Wellrohr handeln. Das Rohr und/oder der Schlauch können auch zusätzlich auf der gesamten äußeren Oberfläche mit einem Signallack bedeckt sein. Diese Schutzvorkehrungen liefert einen effektiven Schutz vor unerlaubtem Zugriff durch Dritte. Ein weiterer Vorteil des Schutzes durch mechanische Komponenten ist, dass eine Abnahme der Ladestation durch die relevanten Behörden vereinfacht wird, da die Umsetzung der Schutzmaßnahme auf einfache Weise für die Behörden ersichtlich ist.

Wenn die Bezahlvorrichtung und die Signaturvorrichtung über eine Datenleitung miteinander verbunden sind, kann ferner die Verbindungen der beiden Enden der Datenleitung mit der Bezahlvorrichtung bzw. der Signaturvorrichtung mit Plomben und/oder Signallack versehen sein und zusätzlich die Datenleitung mechanisch vor einem Zugriff von außen abgeschirmt sein.

Zur sicheren Übertragung der Identifikationskennung von der Bezahlvorrichtung zur Signaturvorrichtung kann die Bezahlvorrichtung ferner dazu eingerichtet sein, die Identifikationskennung vor der Ausgabe durch die Bezahlvorrichtung digital zu signieren und/oder zu verschlüsseln und die Signaturvorrichtung dazu eingerichtet sein, die digital signierte und/oder verschlüsselte Identifikationskennung zu empfangen und zu entschlüsseln bzw. auf Authentizität zu prüfen. Dazu können die Bezahlvorrichtung und die Signaturverrichtung Signatur- bzw. Verschlüsselungs- und Entschlüsselungs-Vorrichtungen aufweisen, die dazu eingerichtet sind, Signaturen bzw. Verschlüsselungs- und Entschlüsselungsverfahren auszuführen. Gemäß diesem Aspekt der vorliegenden Offenbarung ist ein Schutz nicht nur dann möglich, wenn die Bezahlvorrichtung und die Signaturvorrichtung über eine Datenleitung verbunden sind, sondern auch wenn die Bezahlvorrichtung und die Signaturvorrichtung drahtlos miteinander kommunizieren, beispielsweise über eine Luftschnittstelle mit Hilfe des Bluetooth-Standards.

Ferner können die Datenleitung und/oder die Stecker der Datenleitung vor einem Signalabgriff mittels elektromagnetischer Induktion geschützt sein. Dazu können die Datenleitung und/oder die Stecker hinsichtlich elektromagnetischer Verträglichkeit (EMV) optimiert sein. So können die Datenleitung und/oder die Stecker einen EMV-Schutz umfassen. Beispielsweise können die Datenleitung und/oder die Stecker mit Kupferleitlack beschichtet, mit Kupfer-Chrom-Nickel bedampft und/oder mit Aluminium bedampft sein.

Gemäß einer Ausführungsform ist die Signaturvorrichtung in dem Stromzähler angeordnet. Gemäß dieser Ausführungsform wird die Identifikationskennung in dem Stromzähler digital signiert. Da es sich bei dem Stromzähler vorzugsweise um einen geeichten Stromzähler handelt, der verplombt wurde, ist dieser schon von Haus aus vor einem unbemerkten Zugriff durch Dritte geschützt, wodurch die Manipulationssicherheit weiter verbessert werden kann.

Gemäß einer weiteren Ausführungsform ist die Signaturvorrichtung physikalisch von dem Stromzähler getrennt. Insbesondere kann die Signaturvorrichtung in der Steuervorrichtung angeordnet sein. Dies hat den Vorteil, dass die Komplexität des Stromzählers geringgehalten werden kann. In diesem Fall kann das Gehäuse der Steuervorrichtung verplombt und/oder mit einem Signallack versehen sein, sodass ein unbefugter Zugriff auf die Steuervorrichtung bzw. die Signaturvorrichtung erkannt werden kann.

Gemäß noch einer weiteren Ausführungsform steht die Identifikationskennung mit Girokonto- und/oder Kreditkarteninformation im Zusammenhang. Beispielsweise handelt es sich bei der Identifikationskennung um die letzten vier Stellen einer Kreditkartennummer oder die letzten vier Stellen einer Girokontonummer.

Neben der Bezahlvorrichtung muss auch der von dem Stromzähler ausgegebene Zählwert vor einem Zugriff oder einer Manipulation durch Dritte geschützt werden.

Dazu kann die Signaturvorrichtung dazu eingerichtet sein, den Zählwert von dem Stromzähler zu empfangen und den Zählwert digital zu signieren, und die Kommunikationsvorrichtung dazu eingerichtet sein, den digital signierten Zählwert an die Zentraleinheit zu senden, wobei der Zählwert von einer Ausgabe durch den Stromzähler bis zum Empfang durch die Signaturvorrichtung vor einem unbefugten und/oder unbemerkten Zugriff durch Dritte geschützt ist. Insbesondere können der Zählwert und die Identifikationskennung in ein Datenpaket kombiniert werden, und das Datenpaket digital signiert werden, wobei das Datenpaket und die Signatur an die Zentraleinheit gesendet werden.

Wenn der Stromzähler und die Signaturvorrichtung über eine Datenleitung miteinander verbunden sind, kann die Verbindungen der beiden Enden der Datenleitung mit dem Stromzähler bzw. der Signaturvorrichtung mit Plomben und/oder Signallack versehen sein. Dadurch kann sichergestellt werden, dass jegliche Manipulation an der Datenleitung bzw. den Verbindungen zwischen Datenleitung und Stromzähler bzw. Signaturvorrichtung erkannt werden kann. Es ist auch denkbar, dass die komplette Datenleitung mit Signallack versehen ist, sodass jegliche Betätigung an der Datenleitung erkannt werden kann. Insbesondere kann die Datenleitung an den beiden Enden Stecker umfassen, die in jeweilige Kupplungen in dem Stromzähler bzw. der Signaturvorrichtung gesteckt sind, wobei die Stecker und Kupplungen mit den Plomben und/oder dem Signallack versehen sind.

Wenn der Stromzähler und die Signaturvorrichtung über eine Datenleitung miteinander verbunden sind, kann die Datenleitung auch mechanisch vor einem Zugriff von außen abgeschirmt sein um einen mechanischen Zugriff auf die Datenleitung zu verhindern. Gemäß einer weiteren Ausführungsform kann die mechanische Abschirmung ein Rohr und/oder einen Schlauch umfassen, welche(s/r) sich von dem Stromzähler bis zur Signaturvorrichtung erstreckt. Insbesondere kann das Rohr und/oder der Schlauch aus einem Material bestehen (beispielsweise Metall), welches nur mit einem hohen mechanischen Aufwand einen Zugriff auf die Datenleitung erlaubt. Es ist auch denkbar, dass das Rohr und/oder der Schlauch aus einem Material besteht (beispielsweise einem Kunststoff), das zwar einfach zu zerstören ist, aber zerstört werden muss, um einen Zugriff auf die Datenleitung zu ermöglichen, sodass ein Zugriff auf die Datenleitung erkannt werden kann.

Wenn der Stromzähler und die Signaturvorrichtung über eine Datenleitung miteinander verbunden sind, kann ferner die Verbindungen der beiden Enden der Datenleitung mit dem Stromzähler bzw. der Signaturvorrichtung mit Plomben und/oder Signallack versehen und die Datenleitung zusätzlich mechanisch vor einem Zugriff von außen abgeschirmt sein.

Zur sicheren Übertragung des Zählwerts von dem Stromzähler zur Signaturvorrichtung kann der Stromzähler auch dazu eingerichtet sein, den Zählwert vor der Ausgabe durch den Stromzähler digital zu signieren und/oder zu verschlüsseln und die Signaturvorrichtung dazu eingerichtet sein, den digital signierten und/oder verschlüsselten Zählwert zu empfangen und zu entschlüsseln bzw. auf Authentizität zu prüfen.

Die oben beschriebenen Aspekte und Varianten können selbstverständlich kombiniert werden, ohne dass dies explizit beschrieben ist. Jede der beschriebenen Ausgestaltungsvarianten ist somit optional zu jeder Ausgestaltungsvariante oder bereits Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

### KURZE BESCHREIBUNG DER ZEICHNUNGEN

Weitere Vorteile, Einzelheiten und Merkmale der hier beschriebenen Verfahren und Vorrichtungen ergeben sich aus der nachfolgenden Beschreibung von Ausführungsbeispielen und den Figuren.
- Fig. 1: zeigt eine schematische Darstellung eines Ausführungsbeispiels eines Ladesystems umfassend eine Ladestation, ein zu ladendendes Elektrofahrzeug und eine Zentraleinheit; und
- Fig. 2: zeigt eine schematische Darstellung eines Ausführungsbeispiels einer Bezahlvorrichtung, einer Signaturvorrichtung und eines Stromzählers.

### DETAILLIERTE BESCHREIBUNG

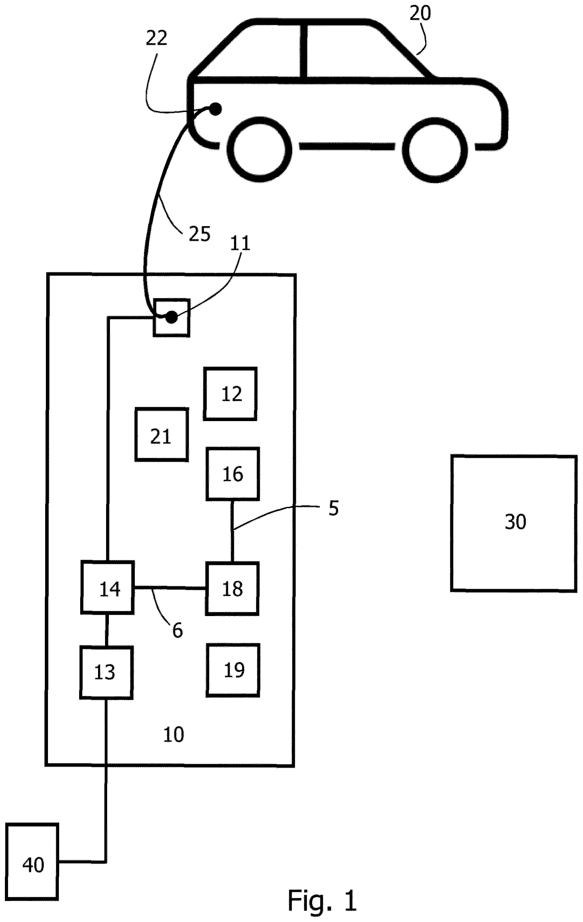

Die Fig. 1 zeigt eine schematische Darstellung eines Ausführungsbeispiels eines Ladesystems umfassend eine Ladestation 10, ein zu ladendendes Elektrofahrzeug 20 und eine Zentraleinheit 30.

Die Ladestation 10 umfasst einen Ladeanschluss 11, an den ein Ladekabel 25 zum Laden des Elektrofahrzeug 20 angeschlossen werden kann, einen geeichten Stromzähler 14, einen elektrischen Anschluss 13, über den die Ladestation 10 von einem Energieversorgungsnetz 14 mit elektrischer Energie versorgt wird, eine Steuervorrichtung 12 zum Steuern des Ladevorgangs in der Ladestation 10, eine Bezahlvorrichtung 16, eine Signaturvorrichtung 18, eine Kommunikationsvorrichtung 19 und eine Anzeigevorrichtung 21.

Die Bezahlvorrichtung 16 und die Signaturvorrichtung 18 sind über eine Datenleitung 5 miteinander verbunden. Der Stromzähler 14 und die Signaturvorrichtung 18 sind über eine Datenleitung 6 miteinander verbunden. In der Fig. 1 sind nur die für das vorliegende Ausführungsbeispiel relevanten Kommunikationsleitungen gezeigt, wobei der Übersichtlichkeit halber darauf verzichtet wurde, sämtliche Kommunikationsleitungen in der Figur einzuzeichnen.

Das Elektrofahrzeug 20 weist ebenfalls einen Ladeanschluss 22 auf, in den das andere Ende des Ladekabels 25 gesteckt werden kann, sodass das Elektrofahrzeug 20 von der Ladestation 10 mit elektrischer Energie geladen wird.

Bei der Anzeigevorrichtung 21 handelt es sich um ein berührungsempfindliches Touch-Display. Will ein Fahrzeughalter sein Elektrofahrzeug 20 mit elektrischer Energie laden, so werden ihm auf der Anzeigevorrichtung 21 mehrere Bezahlmöglichkeiten vorgeschlagen. Der Fahrzeughalter wählt eine Zahlung mit seiner Kreditkarte aus. Anschließend führt der Fahrzeughalter seine Kreditkarte in die als Kreditkartenterminal ausgebildete Bezahlvorrichtung 16 ein. Danach autorisiert die Bezahlvorrichtung 16 ein Sicherheitsbetrag (beispielsweise 25 €) von der Kreditkarte. Anschließend startet nach Verbindung des Ladekabels 25 mit den Anschlüssen 11 und 22 der Ladevorgang. Dabei zählt der geeichte Stromzähler 14 die von der Ladestation 10 dem Elektrofahrzeug 20 zugeführte elektrische Energie und bestimmt einen Zählwert. Nach Ende des Ladevorgangs zieht der Fahrzeughalter das Ladekabel 25 von dem Ladeanschluss 11 ab. Anschließend erfolgt eine Zahlung über die Bezahlvorrichtung 16 und darauffolgend eine Abrechnung über die Kreditkarte.

Nach dem Eichgesetz muss dem Kunden die Möglichkeit gegeben werden, zu prüfen, ob er die Energiemenge erhalten hat, welche ihm in Rechnung gestellt wird. Zu diesem Zweck müssen die Daten, welche der Kunde für seine Prüfung benötigt, manipulationssicher abgespeichert und vorgehalten werden. Dazu wird der von dem geeichten Stromzähler 14 bestimmte Zählwert der Signaturvorrichtung 18 zugeführt und von dieser digital signiert.

Auch die durch die Bezahlvorrichtung 16 erfasste Kreditkarteninformation muss manipulationssicher gespeichert und vorgehalten werden. Dazu wird die Kreditkarteninformation, beispielsweise die letzten vier Ziffern der Kreditkartennummer, von der Bezahlvorrichtung 16 an die Signaturvorrichtung 18 weitergeleitet und dort digital signiert. Weitere Daten (insbesondere die zusätzlichen Informationselemente), wie Information zur Ladestation und Zeitinformation des Ladevorgangs, können an die Signaturvorrichtung 18 weitergeleitet und dort digital signalisiert werden. Insbesondere können der Zählwert ("Was"), der Teil der Kreditkartennummer ("Wer"), Information zur Ladestation ("Wo") und Zeitinformation zum Ladevorgang ("Wann") zu einem Datenpaket zusammengefasst, von der Signaturvorrichtung 18 digital signiert und das Datenpaket zusammen mit einer Signatur von der Kommunikationsvorrichtung 19 über eine Luftschnittstelle an die Zentraleinheit 30 gesendet werden. Die Signatur in der Signaturvorrichtung 18 kann dabei mit Hilfe eines privaten und eines öffentlichen Schlüssels (in Fig. 1 nicht gezeigt) über ein asymmetrisches Signaturverfahren erfolgen.

Um einen Schutz der Kreditkartendaten zu gewährleisten, wird die Kreditkarteninformation (d.h. die Kreditkartennummer bzw. ein Teil der Kreditkartennummer) von der Ausgabe durch die Bezahlvorrichtung 16 bis zum Empfang durch die Signaturvorrichtung 18 vor einem unbefugten und/oder unbemerkten Zugriff durch Dritte geschützt.

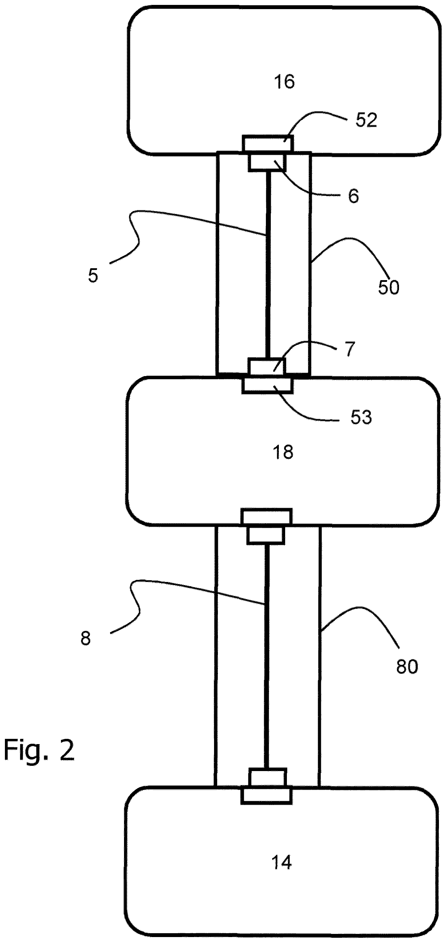

Die Fig. 2 zeigt eine schematische Darstellung eines Ausführungsbeispiels einer Bezahlvorrichtung, einer Signaturvorrichtung und eines Stromzählers. Insbesondere handelt es sich bei dem Ausführungsbeispiel der Fig. 2 um die in der Fig. 1 gezeigte Bezahlvorrichtung 16, Signaturvorrichtung 18 und den Stromzähler 14.

Über eine Datenleitung 5 ist die Bezahlvorrichtung 16 mit der Signaturvorrichtung 18 verbunden. Die Datenleitung 5 umfasst an dem der Bezahlvorrichtung 16 zugewandten Ende einen ersten Stecker 6 und an dem der Signaturvorrichtung 18 zugewandten Ende einen zweiten Stecker 7. Die Bezahlvorrichtung 16 umfasst eine erste Kupplung 52 und die Signaturvorrichtung 18 umfasst eine zweite Kupplung 53. Der erste Stecker 6 ist in die erste Kupplung 52 gesteckt und der zweite Stecker 7 ist in die zweite Kupplung 53 gesteckt, so dass eine elektrische Verbindung zwischen Bezahlvorrichtung 16 und Signaturvorrichtung 18 erfolgt. Über eine weitere Datenleitung 8 ist die Signaturvorrichtung 18 mit dem Stromzähler 14 verbunden.

Zum Schutz vor Zugriff durch Dritte auf die Datenleitung 5 ist ein Metallrohr 50 vorgesehen, welches die Datenleitung 5 vor einem mechanischen Zugriff schützt. Insbesondere erstreckt sich das Metallrohr 50 von der Bezahlvorrichtung 16 bis zur Signaturvorrichtung 18. Zum weiteren Schutz der Datenleitung 5 vor einem unbemerkten Zugriff wurde auf den ersten Stecker 6, den zweiten Stecker 7, die erste Kupplung 52 und die zweite Kupplung 53 Signallack aufgetragen (in Fig. 2 nicht gezeigt), der Spuren hinterlässt, wenn von außen auf die Stecker 6 und 7 bzw. Kupplungen 52 und 53 zugegriffen wird. Alternativ oder zusätzlich können der erste Stecker 6 und die erste Kupplung 52 bzw. der zweite Stecker 7 und die zweite Kupplung 53 verplombt sein. Es ist auch denkbar, dass die Datenleitung 5 vollständig mit Signallack versehen ist. Ferner kann das Metallrohr 50 vollständig mit Signallack bedeckt sein.

Ein entsprechender Schutz bzw. eine entsprechende Nachvollziehbarkeit von Manipulationen kann auch an der Datenleitung 8 zwischen der Signaturvorrichtung 18 und dem Stromzähler 14 vorgesehen sein. So ist in der Fig. 2 ein Metallrohr 80 gezeigt, welches sich von der Signaturvorrichtung 18 bis zum Stromzähler 14 erstreckt und die Datenleitung 8 vor einem Zugriff durch Dritte geschützt. Die in der Fig. 2 gezeigten Stecker an der Datenleitung 8 und Kupplungen an der Signaturvorrichtung 18 und dem Stromzähler 14 können entsprechend mit Signallack bzw. Plomben vor einem unbemerkten Zugriff durch Dritte geschützt sein.

Die Signaturvorrichtung 18 kann auch innerhalb der in der Fig. 1 gezeigten Steuervorrichtung 12 angeordnet sein.

Gemäß einer weiteren Ausführungsform kann die Signaturvorrichtung 18 in dem Stromzähler 14 vorgesehen sein. In dieser Ausführungsform beherbergt ein gemeinsames Gehäuse (in den Figuren nicht gezeigt) den Stromzähler 14 und die Signaturvorrichtung 18, wobei das Gehäuse verplombt bzw. mit Hilfe von Signallack geschützt ist.

Folglich kann die Bezahlvorrichtung 16, insbesondere von der Bezahlvorrichtung 16 erfasste Daten bzw. in der Bezahlvorrichtung 16 erzeugte Daten, welche die Bezahlvorrichtung 16 verlassen, vor Manipulationsversuchen geschützt werden. Entsprechend kann auch der Stromzähler 14 geschützt werden.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Ladestation (10) für Elektrofahrzeuge (20) umfassend
eine Steuervorrichtung (12), die dazu eingerichtet ist, einen Ladevorgang eines mit der Ladestation (10) verbundenen Elektrofahrzeugs (20) mit elektrischer Energie zu steuern;
einen Stromzähler (14), der dazu eingerichtet ist, einen Zählwert betreffend eine während des Ladevorgangs von der Ladestation (10) dem Elektrofahrzeug (20) zugeführte Energiemenge zu bestimmen;
eine Bezahlvorrichtung (16), die dazu eingerichtet ist, die von der Ladestation (10) dem Elektrofahrzeug (20) zugeführte Energiemenge zu bezahlen und eine Identifikationskennung auszugeben;
eine Signaturvorrichtung (18), die dazu eingerichtet ist, die von der Bezahlvorrichtung (16) ausgegebene Identifikationskennung zu empfangen und die Identifikationskennung und zusätzliche Informationselemente digital zu signieren; und
eine Kommunikationsvorrichtung (19), die dazu eingerichtet ist, die digital signierte Identifikationskennung und die digital signierten zusätzlichen Informationselemente an eine Zentraleinheit (30) zu senden, wobei
die Identifikationskennung von der Ausgabe durch die Bezahlvorrichtung (16) bis zum Empfang durch die Signaturvorrichtung (18) vor einem unbefugten und/oder unbemerkten Zugriff durch Dritte geschützt ist und
die Bezahlvorrichtung (16) und die Signaturvorrichtung (18) über eine Datenleitung (5) miteinander verbunden sind,
**dadurch gekennzeichnet, dass**
die Datenleitung (5) mechanisch vor einem Zugriff von außen abgeschirmt ist und
die mechanische Abschirmung ein Rohr und/oder einen Schlauch (50) umfasst, welche(s/r) sich von der Bezahlvorrichtung (16) bis zur Signaturvorrichtung (18) erstreckt.

2. Ladestation (10) nach Anspruch 1, wobei die Bezahlvorrichtung (16) und die Signaturvorrichtung (18) über eine Datenleitung (5) miteinander verbunden sind und die Verbindungen der beiden Enden der Datenleitung (5) mit der Bezahlvorrichtung (16) bzw. der Signaturvorrichtung (18) mit Plomben und/oder Signallack versehen sind.

3. Ladestation (10) nach Anspruch 2, wobei die Datenleitung (5) an den beiden Enden Stecker (6, 7) umfasst, die in jeweilige Kupplungen (52, 53) in der Bezahlvorrichtung (16) bzw. der Signaturvorrichtung (18) gesteckt sind, und die Stecker und Kupplungen mit den Plomben und/oder dem Signallack versehen sind.

4. Ladestation (10) nach Anspruch 2 oder 3, wobei die Datenleitung (5) vollständig mit Signallack bedeckt ist.

5. Ladestation (10) nach Anspruch 1, wobei die Bezahlvorrichtung (16) und die Signaturvorrichtung (18) über eine Datenleitung (5) miteinander verbunden sind, die Verbindungen der beiden Enden der Datenleitung (5) mit der Bezahlvorrichtung (16) bzw. der Signaturvorrichtung (18) mit Plomben und/oder Signallack versehen sind und die Datenleitung (5) mechanisch vor einem Zugriff von außen abgeschirmt ist.

6. Ladestation (10) nach Anspruch 1, wobei die Bezahlvorrichtung (16) und die Signaturvorrichtung (18) über eine Datenleitung (5) miteinander verbunden sind und die Datenleitung (5) einen Elektromagnetische Verträglichkeit-, EMV, Schutz umfasst.

7. Ladestation (10) nach Anspruch 1, wobei die Bezahlvorrichtung (16) dazu eingerichtet ist, die Identifikationskennung vor der Ausgabe durch die Bezahlvorrichtung (16) digital zu signieren und/oder zu verschlüsseln und die Signaturvorrichtung (18) dazu eingerichtet ist, die digital signierte und/oder verschlüsselte Identifikationskennung zu empfangen.

8. Ladestation (10) nach einem der vorhergehenden Ansprüche, wobei die Signaturvorrichtung (18) in dem Stromzähler (14) angeordnet ist.

9. Ladestation (10) nach einem der Ansprüche 1 bis 9, wobei die Signaturvorrichtung (18) in der Steuervorrichtung (12) angeordnet ist.

10. Ladestation (10) nach einem der vorhergehenden Ansprüche, wobei die Identifikationskennung mit Girokonto- und/oder Kreditkarteninformation im Zusammenhang steht.

11. Ladestation (10) nach einem der vorhergehenden Ansprüche, wobei
die Signaturvorrichtung (18) dazu eingerichtet ist, den Zählwert von dem Stromzähler (14) zu empfangen und den Zählwert digital zu signieren;
die Kommunikationsvorrichtung (19) dazu eingerichtet ist, den digital signierten Zählwert an die Zentraleinheit (30) zu senden; und
der Zählwert von einer Ausgabe durch den Stromzähler (14) bis zum Empfang durch die Signaturvorrichtung (18) vor einem unbefugten und/oder unbemerkten Zugriff durch Dritte geschützt ist.

## Claims

1. Charging station (10) for electric vehicles (20) comprising
a control device (12) which is configured to control a charging process of an electric vehicle (20) connected to the charging station (10) with electrical energy;
a power meter (14) which is configured to determine a reading concerning an amount of energy supplied by the charging station (10) to the electric vehicle (20) during the charging process;
a payment device (16) which is configured to pay for the amount of energy supplied by the charging station (10) to the electric vehicle (20) and to issue an identification code;
a signature device (18) which is configured to receive the identification code issued by the payment device (16) and to digitally sign the identification code and additional information elements; and
a communication device (19) which is configured to send the digitally signed identification code and the digitally signed additional information elements to a central unit (30), wherein
the identification code is protected from unauthorized and/or unnoticed access by third parties from the issuance by the payment device (16) until receipt by the signature device (18), and
the payment device (16) and the signature device (18) are connected to each other via a data line (5),
**characterized in that**
the data line (5) is mechanically shielded against access from outside, and
the mechanical shielding comprises a tube and/or a hose (50) which extends from the payment device (16) to the signature device (18).

2. Charging station (10) according to claim 1, wherein the payment device (16) and the signature device (18) are connected to each other via a data line (5), and the connections of the two ends of the data line (5) to the payment device (16) and the signature device (18) are provided with seals and/or signal paint.

3. Charging station (10) according to claim 2, wherein the data line (5) at both ends comprises plugs (6, 7) which are plugged into respective couplings (52, 53) in the payment device (16) and the signature device (18), and the plugs and couplings are provided with seals and/or signal paint.

4. Charging station (10) according to claim 2 or 3, wherein the data line (5) is completely covered with signal paint.

5. Charging station (10) according to claim 1, wherein the payment device (16) and the signature device (18) are connected to each other via a data line (5), the connections of the two ends of the data line (5) to the payment device (16) and the signature device (18) are provided with seals and/or signal paint, and the data line (5) is mechanically shielded against access from outside.

6. Charging station (10) according to claim 1, wherein the payment device (16) and the signature device (18) are connected to each other via a data line (5), and the data line (5) comprises an electromagnetic compatibility, EMC, protection.

7. Charging station (10) according to claim 1, wherein the payment device (16) is configured to digitally sign and/or encrypt the identification code before issuing it, and the signature device (18) is configured to receive the digitally signed and/or encrypted identification code.

8. Charging station (10) according to any one of the preceding claims, wherein the signature device (18) is arranged in the power meter (14).

9. Charging station (10) according to any one of claims 1 to 9, wherein the signature device (18) is arranged in the control device (12).

10. Charging station (10) according to any one of the preceding claims, wherein the identification code is associated with checking account and/or credit card information.

11. Charging station (10) according to any one of the preceding claims, wherein
the signature device (18) is configured to receive the reading from the power meter (14) and to digitally sign the reading;
the communication device (19) is configured to send the digitally signed reading to the central unit (30); and
the reading is protected from unauthorized and/or unnoticed access by third parties from issuance by the power meter (14) until receipt by the signature device (18).

## Revendications

1. Station de recharge (10) pour véhicules électriques (20) comprenant
un dispositif de commande (12) qui est conçu pour commander un processus de charge en énergie électrique d'un véhicule électrique (20) connecté à la station de recharge (10);
un compteur électrique (14) qui est conçu pour déterminer la valeur numérique concernant une quantité d'énergie fournie au véhicule électrique (20) par la station de charge (10) pendant le processus de charge;
un dispositif de paiement (16) qui est conçu pour payer la quantité d'énergie fournie par la station de charge (10) au véhicule électrique (20) et pour émettre un numéro d'identification;
un dispositif de signature (18) qui est conçu pour recevoir le code d'identification émis par le dispositif de paiement (16) et pour signer numériquement le code d'identification et des éléments d'informations supplémentaires; et
un dispositif de communication (19) qui est conçu pour envoyer le code d'identification signé numériquement et les éléments d'informations supplémentaires signés numériquement à une unité centrale (30),
le code d'identification étant protégé contre un accès non autorisé et/ou à l'insu de l'utilisateur par des tiers, depuis son émission par le dispositif de paiement (16) jusqu'à sa réception par le dispositif de signature (18), et
le dispositif de paiement (16) et le dispositif de signature (18) sont reliés entre eux par une ligne de données (5),
**caractérisée en ce que**
la ligne de données (5) est protégée mécaniquement contre tout accès de l'extérieur et
la protection mécanique comprend un tube et/ou un tuyau (50) qui s'étend depuis le dispositif de paiement (16) jusqu'au dispositif de signature (18).

2. Station de recharge (10) selon la revendication 1, dans lequel le dispositif de paiement (16) et le dispositif de signature (18) sont reliés entre eux par une ligne de données (5) et les connexions des deux extrémités de la ligne de données (5) avec le dispositif de paiement (16) ou le dispositif de signature (18) sont pourvues de plombs et/ou de vernis de marquage.

3. Station de recharge (10) selon la revendication 2, dans lequel la ligne de données (5) comprend, aux deux extrémités, des connecteurs (6, 7) qui sont enfichés dans des accouplements respectifs (52, 53) dans le dispositif de paiement (16) ou le dispositif de signature (18), et les connecteurs et les accouplements sont pourvus des plombs et/ou du vernis de marquage.

4. Station de recharge (10) selon la revendication 2 ou 3, la ligne de données (5) étant entièrement recouverte de vernis de marquage.

5. Station de recharge (10) selon la revendication 1, dans lequel le dispositif de paiement (16) et le dispositif de signature (18) sont reliés entre eux par une ligne de données (5), les connexions des deux extrémités de la ligne de données (5) avec le dispositif de paiement (16) ou le dispositif de signature (18) sont pourvues de plombs et/ou de vernis de marquage et la ligne de données (5) est protégée mécaniquement contre un accès de l'extérieur.

6. Station de recharge (10) selon la revendication 1, dans lequel le dispositif de paiement (16) et le dispositif de signature (18) sont reliés entre eux par une ligne de données (5) et la ligne de données (5) comprend une protection de compatibilité électromagnétique, CEM.

7. Station de recharge (10) selon la revendication 1, dans lequel le dispositif de paiement (16) est conçu pour signer numériquement et/ou chiffrer le code d'identification avant son émission par le dispositif de paiement (16) et le dispositif de signature (18) est conçu pour recevoir le code d'identification signé numériquement et/ou chiffré.

8. Station de recharge (10) selon l'une des revendications précédentes, dans lequel le dispositif de signature (18) est disposé dans le compteur électrique (14).

9. Station de recharge (10) selon l'une quelconque des revendications 1 à 9, dans lequel le dispositif de signature (18) est disposé dans le dispositif de commande (12).

10. Station de recharge (10) selon l'une quelconque des revendications précédentes, dans lequel le code d'identification est associé à des informations de compte courant et/ou de carte de crédit.

11. Station de recharge (10) selon l'une quelconque des revendications précédentes, dans lequel
le dispositif de signature (18) est conçu pour recevoir la valeur numérique du compteur électrique (14) et pour signer numériquement la valeur numérique;
le dispositif de communication (19) est conçu pour envoyer la valeur numérique signée numériquement à l'unité centrale (30); et
la valeur numérique est protégée contre un accès non autorisé et/ou à l'insu par l'utilisateur par des tiers depuis une émission par le compteur électrique (14) jusqu'à la réception par le dispositif de signature (18).
